# EUROPÄISCHE PATENTSCHRIFT

(11) **EP 3 781 856 B1**
(45) Veröffentlichungstag und Bekanntmachung des Hinweises auf die Patenterteilung: **04.05.2022**
(21) Anmeldenummer: 19717427.9
(22) Anmeldetag: 05.04.2019
(51) Int. Cl.: F16L 23/08, F16L 23/18, F16L 23/20, F16L 23/00

(54) **SPANNVORRICHTUNG ZUM ABDICHTEN UND VERBINDEN ZWEIER ROHRE**
CLAMPING DEVICE FOR SEALING AND CONNECTING TWO PIPES
DISPOSITIF DE SERRAGE POUR ASSURER L'ÉTANCHÉITÉ ET LE RACCORDEMENT DE DEUX TUYAUX

(30) Priorität: 20.04.2018 DE 102018109617
(43) Veröffentlichungstag der Anmeldung: 24.02.2021
(73) Patentinhaber: ElringKlinger AG, 72581 Dettingen/Erms (DE)
(72) Erfinder: RIMINGTON, Darren, 72581 Dettingen-Erms (DE)
(74) Vertreter: Schmidt, Axel
(86) Internationale Anmeldenummer: PCT/DE2019/100317
(87) Internationale Veröffentlichungsnummer: WO 2019/201381

(56) Entgegenhaltungen:
- DE-A1-102016 103 687
- FR-A3- 2 925 647
- KR-B1- 101 267 032

## Beschreibung

Die vorliegende Erfindung betrifft eine Spannvorrichtung zum Abdichten und Verbinden zweier Rohre an einander gegenüberliegend bzw. benachbart angeordneten Enden. Dabei weisen diese Enden beider Rohre jeweils eine nach außen hin gerichtete Umfangswulst oder eine Vielzahl von nach außen hin gerichteten Vorsprüngen auf. Aneinanderstoßend angeordnet werden diese Wülste oder Vorsprünge gemeinsam durch eine Klammer mit U- oder V-förmigem Querschnitt umschlossen. Die Klammer kann dabei in Form eines Klemmbandes, Klemmbügels oder als Klemmschelle ausgeführt sein. Durch ein Festziehen der Klammer beispielsweise über ein Spannelement werden die Enden beider Rohre fixiert und dabei abdichtend gegeneinandergedrückt.

Aus dem Stand der Technik sind diverse Ansätze für Spannvorrichtungen mit Verbesserung der Dichtigkeit zwischen den durch die Klammer umschlossenen Enden beider Rohre bekannt. So offenbart z.B. die EP 0 849 518 B1 die Verwendung eines profilierten Dichtungsrings, der symmetrisch zu Schenkeln der als Klemmband ausgeführten Klammer angeordnet ist und beim Festziehen der Klammer außen abdichtend auf die Enden beider Rohre gepresst wird.

Zuvor offenbarte bereits die US 3,964,773 A eine Rohrverbindung unter Verwendung einer Klemmschelle, die zueinander symmetrisch aufgebaute Rohrenden, wie auch asymmetrisch zueinander als Wulst und dazu angepasster konischer Weitung ausgebildete Rohrenden unter Einsatz einer zwischen Kontaktflächen der Rohrenden eingelegten Ringdichtung abdichtend fixiert.

Die EP 1 451 498 B1 greift wesentliche Vorteile einer Rohrverbindung gemäß der US 3,964,773 A auf und schafft unter Fixierung der Dichtung in Form eines profilierten Metallblechs an der Klemmschelle eine deutliche Vereinfachung der Handhabung. Die Dichtung wird in einer Vormontage an der Klemmschelle verklammert oder verrastet. Diese Fixierung kann einerseits eine für einen Einbau notwendige Zeit verkürzen, verhindert andererseits aber auch ein Verrutschen und/oder Verkippen der Dichtung zwischen den Kontaktflächen der Rohrenden mit den sonst nachteiligen Konsequenzen einer teilweisen Minderung einer freien Querschnittsfläche bei Schaffung einer Störung für eine fluide Strömung bis hin zu einer Undichtigkeit. Zur Fixierung der Dichtung an der Klemmschelle sind an der Dichtung nasenförmige Befestigungsmittel vorgesehen, die in einen Außenraum eines Dichtungsbereichs zwischen den Rohrenden hin verlaufen.

Ferner offenbart die DE 10 2016 103 687 A1 eine Profilschelle mit einem Dichtelement, das über sich radial weit nach außen hin erstreckende Haltelaschen an einem Spannelement der Profilschelle sowie einer Verbindungsbrücke als gelenkiger Verbindung zwischen zwei Hälften der Profilschelle gehalten ist.

Es ist die Aufgabe der vorliegenden Erfindung, eine bekannte Vorrichtung der genannten Art unter Vereinfachung ihres Aufbaus bei Verbesserung einer Abdichtungswirkung weiterzubilden.

Diese Aufgabe wird erfindungsgemäß durch die Merkmale von Anspruch 1 dadurch gelöst, dass die Vorrichtung eine Klammer mit Ausnehmungen aufweist, die in einer Ebene im Wesentlichen senkrecht zu einer Mittelachse verlaufen, und in der Klammer eine Dichtung eingesetzt ist, wobei durch die Ausnehmungen der Klammer an der Dichtung fixierte und nasenförmig ausgebildete Befestigungsmittel verschieblich hindurchgreifend angeordnet sind, durch die die Dichtung relativ zu der Klammer positioniert ist.

Es ist eine Erkenntnis der vorliegenden Erfindung, dass durch Befestigungsmittel, die beim Spannen der Klammer innerhalb der Klammer verformt werden, zumindest bereichsweise unterschiedliche Kräfte auf die Dichtung einwirken. Das kann bis zu lokalen Undichtigkeiten führen. Zudem weisen bekannte Spann- und Befestigungsmittel eine sehr komplexe räumliche Form auf, die zusätzliche Schritte in einer Fertigung und mehr Material erfordern. Erfindungsgemäß wird eine vereinfachte Form der Dichtung vorgeschlagen. Dabei können sich durch die Ausnehmungen der Klammer auch beim Schließen und Spannen der Klammer an der Dichtung keine ungleichen Kräfte auftreten, da die Befestigungsmittel nicht länger in der bekannten Weise verformt werden.

Erfindungsgemäß sind die Befestigungsmittel an den Ausnehmungen der Klammer verschieblich hindurchgreifend angeordnet. Ein Positionieren eines erfindungsgemäßen Gegenstandes zwischen zwei Rohrenden wird also eben so wenig durch die Befestigungsmittel der Dichtung an der Klammer behindert, wie ein Schließen der Klammer, da sich die Befestigungsmittel ohne Verspannung oder Verbiegung relativ zu der Klammer durch die Ausnehmungen hindurch bewegen können. Die Dichtung selber bleibt von der Klammer her frei von mechanischen Spannungen oder Verformungen. Damit ist die Dichtung relativ zu der Klammer für einen ersten Schritt beim Einbau zumindest grob ausreichend positioniert. Hierdurch wird ein Einbau der Spannvorrichtung zwischen den Enden der beiden Rohre erheblich erleichtert und beschleunigt. Zudem weist die Dichtung vorzugsweise auch selber zusätzlich Positionierhilfen auf, insbesondere in der Form von Teilen eines Fang- oder Führungstrichters zur automatischen Positionierung und Ausrichtung bei einem Erstkontakt mit den Enden der abdichtend zu verbindenden Rohre. Durch die Ausnehmungen der Klammer werden die Befestigungsmittel insbesondere beim Schließen der Klammer nicht mehr verformt, so dass die gesamte Kraft der Klammer gleichmäßig über den gesamten Umfang auf die zu verbindenden Rohrenden sowie die Dichtung einwirken kann. Ohne Verformung durch die Klammer durch die Befestigungsmittel ist die Dichtungswirkung durch gleichmäßige Belastung der Dichtung bei geschlossener Klammer deutlich verbessert.

Vorteilhafte Weiterbildungen der Erfindung sind Gegenstand der abhängigen Ansprüche. Demnach sind die Ausnehmungen der Klammer und/oder die Befestigungsmittel in ihrer Länge und Breite so bemessen, dass sie durch eine Verformung der Dichtung und/oder der Klammer beim Schließen in den Ausnehmungen der Klammer verschieblich sind, und zwar in radialer Richtung beim Anlegen der Klammer um die Rohrenden und/oder in Umfangsrichtung. Beim Schließen der Klammer wird diese durch Minderung ihres Außendurchmessers verformt. Auch das Zusammenpressen der Rohrenden mit der dazwischenliegenden Dichtung kann eine Verformung der Dichtung beim Schließen der Klammer hervorgerufen, insbesondere durch ein zumindest teilweises Plattdrücken von Sicken der Dichtung. Durch die Möglichkeit einer Verschiebung der Befestigungsmittel in den jeweiligen Ausnehmungen der Klammer wird sichergestellt, dass es zu keiner bereichsweisen zusätzlichen Verspannung der Dichtung über eine jeweils nur lokale Verformung der Befestigungsmittel durch die Klammer bei deren Schließen bzw. Festziehen kommt. Vorzugsweise sind die Befestigungsmittel mit der Dichtung einstückig verbunden. Bei einer aus einem Metallblech im Zuge eines Stanz-Biegeverfahrens hergestellten Dichtung müssen Befestigungsmittel damit nicht separat mit der Dichtung verbunden werden. Die Befestigungsmittel werden vielmehr direkt an die Dichtung angeformt einstückig ausgestanzt und entsprechend räumlich gebogen.

Gemäß einer wesentlichen Weiterbildung der Erfindung sind die Befestigungsmittel selber an den Ausnehmungen der Klammer rastend ausgebildet. Diese Verrastung dient einer verliersicheren Fixierung der Dichtung in der Klammer, wobei eine gewisse Beweglichkeit und Verschiebbarkeit der Dichtung relativ zu der Klammer weiterhin möglich ist. Das Verrasten der Befestigungsmittel wird in einer Ausführungsform vorteilhafterweise dadurch hervorgerufen, dass die Befestigungsmittel im Wesentlichen senkrecht zu einer Erstreckungsrichtung der Ausnehmungen der Klammer ungefähr wellenförmig gebogen sind.

Alternativ oder zusätzlich weisen die Befestigungsmittel jeweils eine Raste auf. Diese Rasten sind in einer Ausführungsform der Erfindung im Bereich freier Enden der Befestigungsmittel vorgesehen. Dabei sind die Rasten vorzugsweise federelastisch ausgeführt, insbesondere als Rastnasen, die aus dem Blechmaterial der Dichtung ausgestanzt und so aufgebogen sind, dass eine jede Rastnase in Einführrichtung durch eine der Ausnehmungen der Klammer hin ansteigend ausgebildet ist. Die Befestigungsmittel selber oder Teile davon wirken also dadurch selber als federelastische Rasten in Ausnehmungen der Klammer, dass sie im Wesentlichen senkrecht zu einer Erstreckungsrichtung der Ausnehmungen der Klammer ungefähr wellenförmig gebogen sind und/oder Rastnasen aufweisen.

In einer bevorzugten Ausführungsform der Erfindung sind mindestens zwei Befestigungsmittel an der Dichtung vorgesehen, die zueinander in Bezug auf einen Mittelpunkt M der Dichtung und der Klammer einen von 180° abweichenden Winkel α bilden. Durch diese Anordnung wird eine selbsttätige Zentrierung der Dichtung in der Klammer beim Einbau zwischen den Rohrenden bewirkt, wobei eine vorstehend beschriebene Verschieblichkeit der Befestigungsmittel in Ausnehmungen der Klammer erhalten bleibt. Vorzugsweise sind aber mindestens drei Befestigungsmittel an der Dichtung verteilt vorgesehen mit entsprechend angeordneten Ausnehmungen in der zugehörigen Klammer.

In einer Weiterbildung der Erfindung ist die Klammer nach Art einer Gelenkkette ausgeführt, insbesondere als viergliedrige Gelenkkette. Zentral in jedem Kettenglied weist die Klammer eine Ausnehmung auf. Die Geometrien der Ausnehmungen sind den Befestigungsmitteln der Dichtung und einer Schließbewegung beim Festziehen der Klammer angepasst.

Im Rahmen der vorliegenden Erfindung wird unter dem Begriff der "Dichtung", die in der Klammer beweglich fixiert ist, nicht nur eine Metaloseal-Dichtung bzw. ein ringförmig geschlossenes Stanz-Biegeteil aus Metallblech verstanden. Vielmehr ist ein Stanz-Biegeteil aus Metallblech statt selber eine Dichtungsfunktionalität zu erfüllen in einer Ausführungsform der Erfindung als Teil eines Dichtungssystems nur Träger einer Weichstoff-Dichtung. Die Weichstoff-Dichtung selber besteht z.B. aus Graphit, Glimmer, einem Elastomer oder keramischen Fasern oder Mischungen der genannten Dichtungswerkstoffe. Eine derartige Dichtung ist zum Aufbau einer axialen und/oder radialen Dichtwirkung als Volumendichtring ausgebildet. Volumendichtringe werden aus Weichstoffbändern z.B. aus Graphit und/oder Glimmerpapier in einem Dickenbereich von 0,1-1mm und Bandbreiten von 5-50 mm gemeinsam mit 0,03-0,1mm dünnen und 5-50mm breiten als Trägerfolien dienenden metallischen Bändern aufgewickelt und anschließend in Form gepresst. Derartige geschlossene Dichtringe sind in einem Dichtungssystem über mindestens ein Ärmchen an dem Träger bei ausreichender Positionierungsgenauigkeit im Einsatz zwischen zwei Rohrenden fixiert. Es ergibt sich somit ein Dichtungssystem umfassend die eigentliche Dichtung mit einem Träger zur Vorfixierung dieses Dichtungssystems an der Klammer mittels der vorstehend im Detail beschriebener Befestigungs-, Fixierungs- und/oder Rastmittel. Das Stanz-Biegeteil aus Metallblech ist also ohne eigene Dichtungsfunktionalität auf seine vorstehend beschriebene Fixierungsfunktion in bzw. an der Klammer reduziert als Teil eines Dichtungssystems Träger einer Weichstoff-Dichtung. Damit muss dieser Träger prinzipiell nicht länger als radial geschlossener Ring ausgeführt werden, wobei auch die vorstehend angegebene Ausführungsform als Lösung der Eingangs gestellten Aufgabe unter Vereinfachung eines Aufbaus einer Weichstoff-Dichtung bei Fixierung durch die Klammer zu einer Verbesserung einer Abdichtungswirkung führt.

Nachfolgend werden weitere Merkmale und Vorteile erfindungsgemäßer Ausführungsformen unter Bezugnahme auf Ausführungsbeispiele anhand der Zeichnung näher erläutert. Darin zeigen in schematischer Darstellung:
- Figur 1:: eine perspektivische Darstellung eines ersten Ausführungsbeispiels einer Spannvorrichtung;
- Figuren 2a - 2d:: vergrößerte Einzelheiten und Details des Ausführungsbeispiels von Figur 1;
- Figur 3:: eine perspektivische Darstellung eines zweiten Ausführungsbeispiels einer Spannvorrichtung;
- Figuren 4a - 4d:: vergrößerte Einzelheiten und Details des Ausführungsbeispiels von Figur 3 analog der Darstellung der Figuren 2a bis 2d;
- Figuren 5a - 5f:: Ansichten letzter Schritte eines Zusammenbaus der Spannvorrichtung gemäß Figur 3 nach einem ersten Verfahren;
- Figuren 6a - 6c:: Ansichten letzter Schritte eines Zusammenbaus der Spannvorrichtung gemäß Figur 3 nach einem zweiten Verfahren und
- Figuren 7a und 7b:: zwei Ausführungsbeispiele für Rastnasen als vergrößerte Einzelheiten.

Über die verschiedenen Abbildungen hinweg werden für gleiche Elemente oder Verfahrensschritt stets die gleichen Bezugszeichen verwendet. Ohne Beschränkung der Erfindung wird nachfolgend nur ein Einsatz von Ausführungsbeispielen an Rohrenden einer Abgasleitung einer Verbrennungskraftmaschine dargestellt und beschrieben. Unter hohem Kostendruck ist hier eine über einen Temperaturbereich von -40°C bis ca. + 900°C thermisch hoch beanspruchbare Vorrichtung zur lösbaren Verbindung zweier Rohrenden vorzugsehen. Diese Verbindung stellt auch unter dynamischer Beanspruchung z.B. durch Schwingungen eines Motorblocks, des Fahrzeugs während der Fahrt, wie auch pulsierend variierende Gas-Innendrücke einen stets ausreichend abdichtenden Übergang zwischen den Rohrenden dar. Zugleich bewirkt die in dieser Spannvorrichtung zum Abdichten und Verbinden der Rohrenden verwendete Dichtung keine Verengung eines freien Rohrquerschnitts oder eine wesentliche Störung für die Fluidströmung. Die skizzierte Anwendung ist aufgrund der hohen Stückzahlen von großer wirtschaftlicher Bedeutung.

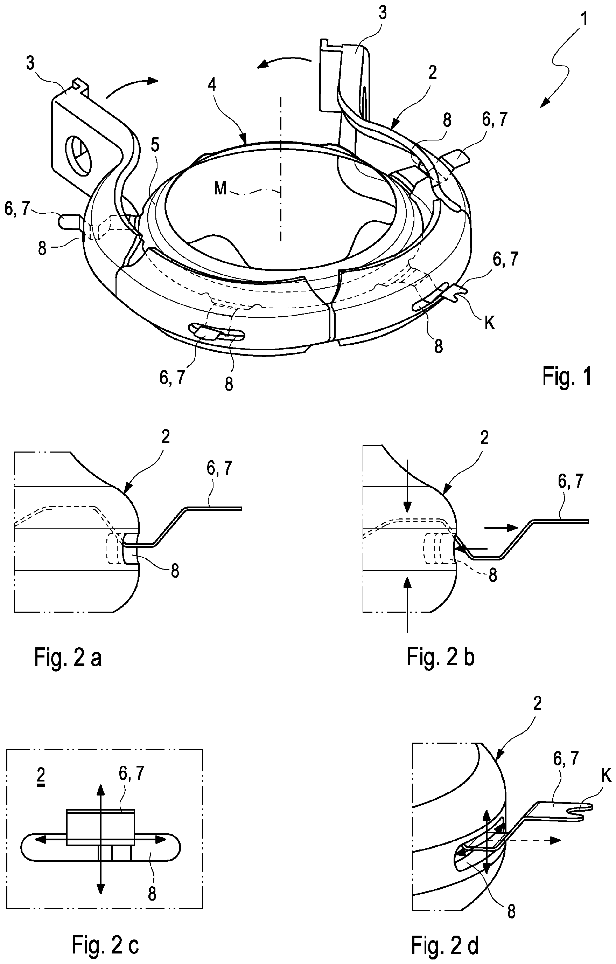

Figur 1 zeigt ein erstes Ausführungsbeispiel einer Spannvorrichtung 1 in einer perspektivischen Darstellung. Demnach umfasst die Spannvorrichtung 1 eine bekannte Klammer 2 mit U-förmigem Querschnitt, die bei einer ungefähr Ω-förmigen Außenkontur in zwei freie Schenkel 3 ausläuft. Zum Aufbau einer Zugkraft werden diese Schenkel 3 in nicht weiter dargestellter Weise durch ein Spannelement in Form einer Verschraubung zueinander gezogen, wie durch die beiden Pfeile dargestellt. Im Einsatz umschließt die Klammer 2 benachbart angeordnete Enden zweier Rohre, die an diesen Enden jeweils eine nach außen hin gerichtete Umfangswulst oder eine Vielzahl von nach außen hin gerichteten Vorsprüngen aufweisen. Durch ein Festziehen der Verschraubung an den Schenkeln 3 der Klammer 2 werden diese Rohrenden aufeinandergepresst. Zur Erhöhung der Dichtigkeit zwischen den beiden Rohrenden ist ferner bekannt, eine Dichtung 4 so an der Klammer zu fixieren, dass ein Dichtbett 5 im Einsatz zwischen den aufeinandergedrückten Enden der Rohre positioniert ist. Derartige Dichtungen sind im Bereich von Verbrennungskraftmaschinen schon wegen der hohen Betriebstemperaturen als Stanz-Biegeteile aus einem rostfreien FederstahlBlech ausgebildet, hier aus X2CrTiNb18.

Bekannte Spannvorrichtungen 1 weisen Dichtungen 4 auf, die über ein komplexes Rückhaltekonzept mit raumgreifenden Fixierungen über vorspringende Haltelaschen gemäß der DE 10 2016 103 687 A1 oder zahlreiche an der Dichtung verteilt angeordnete Halterungen verfügen, wie es z.B. das Patent EP 1 451 498 B1 zeigt. Die Dichtung 4 wird an der als Klemme ausgeführten Klammer 2 der Spannvorrichtungen 1 stark festgehalten. Wenn die Klammer 2 zur Fixierung der Rohrenden und deren Abdichtung geschlossen dabei ihre Größe reduziert wird, verformt sich die Dichtung 4 und mit der Dichtung 4 werden auch die Dichtungssicken und die räumliche Gestalt der Dichtung 4 lokal verformt und damit deren Funktionalität auf Dauer einschränken kann.

Ein wesentliches Merkmal der vorliegenden Erfindung liegt darin, dass erfindungsgemäß durch Befestigungsmittel zur Fixierung der Dichtung 4 in der Klammer 2 weder ein freier Dichtungsdurchmesser der Dichtung 4, noch das Dichtbett 5 durch das Schließen und Festziehen der Klammer 2 beeinflusst werden, insbesondere durch lokale Verformungen, die durch verspannte Haltelaschen hervorgerufen werden. Es wurde anhand bekannter Spannvorrichtungen 1 erkannt, dass ein wesentliches Problem dieser Spannvorrichtungen 1 mit integrierter Dichtung 4 gerade darin liegt, dass sie bei geschlossener Klammer 2 den Durchmesser der Dichtung 4 verändern, über den Umfang der Klammer lokal unterschiedlich auf die Dichtung einwirkende Anpresskräfte aufbauen und damit die Dichtfunktionalität insgesamt beeinträchtigt. Die hier vorgeschlagenen und nachfolgend im Detail beschriebenen Lösungen ermöglichen das Schließen der Klemme 2 hingegen ohne jede Beeinflussung des Dichtungsdurchmessers und der Dichtfunktion.

Wie in der Abbildung von Figur 1 erkennbar wird die Dichtung 4 in diesem Ausführungsbeispiel durch nasenförmig ausgebildete Befestigungsmittel 6 in Form von federelastischen Klipsen 7 in der Klammer 2 gehalten. Dazu greifen vier am Umfang der Dichtung 4 verteilt angeordnete Klipse 7 durch längliche Ausnehmungen 8 der Klammer 2 hindurch und halten damit die Dichtung 4 an der Klammer 2. Die Ausnehmungen 8 verlaufen in der Klammer 2 in einer Ebene im Wesentlichen senkrecht zu einer Mittelachse M und sind ungefähr in der Mitte einer länglichen Außenseite der Klammer 2 vorgesehen. Eine Kerbe K in einem der Befestigungsmittel 6 dient u.a. zur Orientierung beim Einbau.

Wie die Abbildung von Figur 2a zeigt, sind die Klipse 7 so geformt, dass sie nicht vollständig eben in einer Ebene senkrecht zu einer Mittelachse M der Spannvorrichtungen 1 liegen. Die Befestigungsmittel 6 sind dadurch selber rastend ausgebildet, dass sie im Wesentlichen senkrecht zu einer Erstreckungsrichtung der Ausnehmungen 8 der Klammer 2, also in radialer Richtung, ungefähr wellenförmig gebogen sind. Dieses Design beinhaltet also als Befestigungsmittel 6 flache, an der Dichtung 4 angeformte Laschen mit zu einem Klips 7 gebogenen Verlauf, die durch je eine der Ausnehmungen 8 der Klammer 2 geschoben werden, um die Dichtung in der Klammer 2 zu verriegeln. Damit fixieren sich die Klipse 7 beim teilweisen Hindurchführen durch eine der Ausnehmungen 8 selbsttätig an der Klammer 2, wobei die Ausnehmungen 8 in einem Tal des Klips 7 zu liegen kommt. Die Abbildung von Figur 2a stellt einen Einbauzustand der Spannvorrichtungen 1 dar, also mit einer Klammer 2 vor dem Festziehen. In diesem geöffneten Zustand drückt der federelastischen Klips 7 leicht gegen die Klammer 2.

Figur 2b zeigt den Zustand dieser Fixierung der Dichtung 4 an der Klammer 2 bei geschlossener Spannvorrichtung 1. Beim Festziehen der Klammer 2 werden die nicht weiter dargestellten Rohrenden aufeinandergedrückt und verformen so auch die Dichtung 4. In der Regel wird die Dichtung 4 bzw. werden darin vorgesehene Sicken mindestens teilweise flachgedrückt. Damit längt sich die Dichtung 4. Diese Längung wird erfindungsgemäß durch die als federelastische Klipse 7 ausgeführten Befestigungsmittel 6 der Dichtung 4 in der Klammer 2 aber nicht behindert. Die Klipse 7 erstrecken sich frei durch die Ausnehmungen 8 der Klammer 2 hindurch, wie in Figur 2b durch die Pfeile angedeutet. Wenn die Klammer geschlossen wird, verringert sich zudem ihr Außendurchmesser. Diese Konstruktion schränkt die Bewegung der Klammer 2 beim Anziehen der Klammer 2 zum Schließen der Spannvorrichtung 1 nicht ein, vielmehr kann sich die Klammer 2 über die Ausnehmungen 8 entlang der Befestigungsmittel 6 bewegen. Die Befestigungsmittel 6 stehen frei aus den Ausnehmungen 8 heraus. Ein lokaler Eintrag zusätzlicher mechanischer Spannungen durch über den gesamten Umfang ungleichmäßig verteilte Materialverformungen der Dichtung 4 ist so vermieden worden.

Die Abbildungen der Figuren 2c und 2d deuten anhand der eingezeichneten Doppelpfeile eine Beweglichkeit der Befestigungsmittel 6 auch in einer Ebene senkrecht zu dem gerade beschriebenen freien Längenausgleich an. Damit ist einerseits ein Toleranzausgleich ohne Rückwirkung durch Verformungen auf die Dichtung 4 realisiert. Aber schon beim Schießen der Klammer 2 und Positionieren der Dichtung 4 zwischen den Rohrenden vor dem Verspannen des Klammer 2 durch Anziehen von Schrauben können die Befestigungsmittel 6 so ihre Aufgabe einer Fixierung der Dichtung 4 an der Klammer 2 erfüllen, ohne ein Schließen der Klammer 2 zu behindern oder nennenswert zu erschweren.

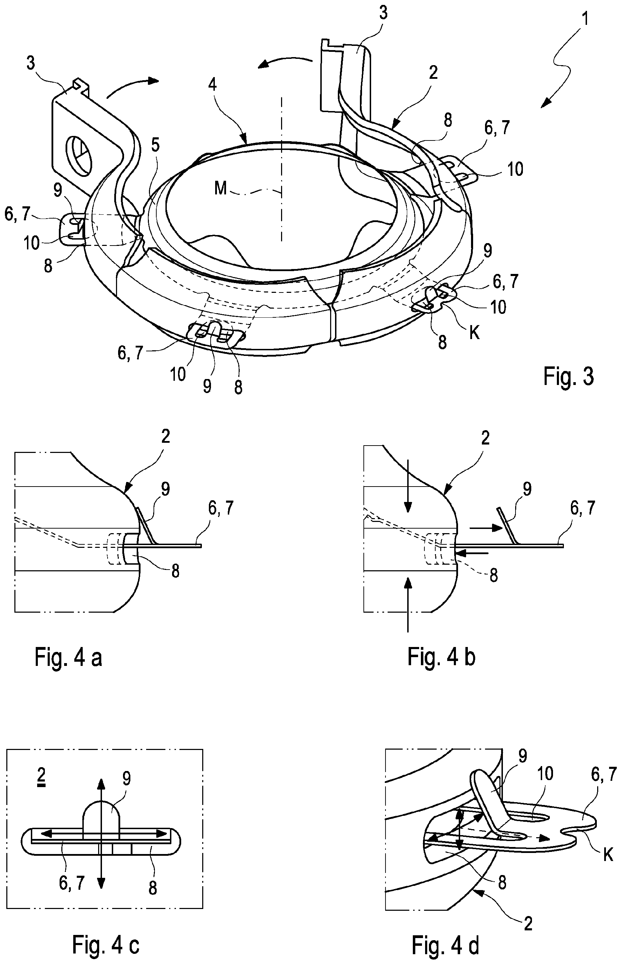

Figur 3 zeigt eine perspektivische Darstellung eines zweiten Ausführungsbeispiels einer Spannvorrichtung 1. Bei gegenüber dem ersten Ausführungsbeispiel identischer Klammer 2 weist die Dichtung 4 nun hiermit einstückig verbundene Befestigungsmittel 6 auf, die sich in radialer Richtung im Wesentlichen eben von der Dichtung 4 erstrecken und dadurch als federelastisch ausgeführte Raste wirken, dass sie jeweils eine Rastnase 9 aufweisen. Die Rastnase 9 ist in Einführrichtung durch eine der Ausnehmungen 8 der Klammer 2 hin ansteigend ausgebildet. Nach einem Hindurchführen federt die Rastnase 9 hinter der Ausnehmung 8 in eine Sperrstellung, die ein Herausziehen dieses Befestigungsmittels 6 effektiv verhindert. Ein Freischnitt 10 um die Rastnase 9 dient u.a. zum Einstellen einer Federsteifigkeit der Rastnase 9 des Befestigungsmittels 6.

Die Abbildungen der Figuren 4a - 4d stellen vergrößerte Einzelheiten und Details des Ausführungsbeispiels von Figur 3 analog der Darstellung der Figuren 2a bis 2d dar. Die Rastnase 9 fixiert das Befestigungsmittel 6, nachdem die Rastnase 9 durch die Ausnehmung 8 der Klammer 2 ganz hindurchgeschoben worden ist, wie aus Figur 4a ersichtlich. Durch das Schließen der Klammer 2 schiebt sich das Befestigungsmittel 6 der Dichtung 4 frei durch die Ausnehmung 8 der Klammer 2 hindurch, siehe Figur 4b, wobei am Umfang der Klammer 2 im Bereich der Ausnehmung 8 in den Figuren 4c und 4d angedeutete Möglichkeiten für eine freien Positionsausgleich ohne Verspannung der Befestigungsmittel 6 in, an oder durch die Klammer 2 vorgesehen sind, wie zuvor schon beim ersten Ausführungsbeispiel, siehe Figuren 2c und 2d.

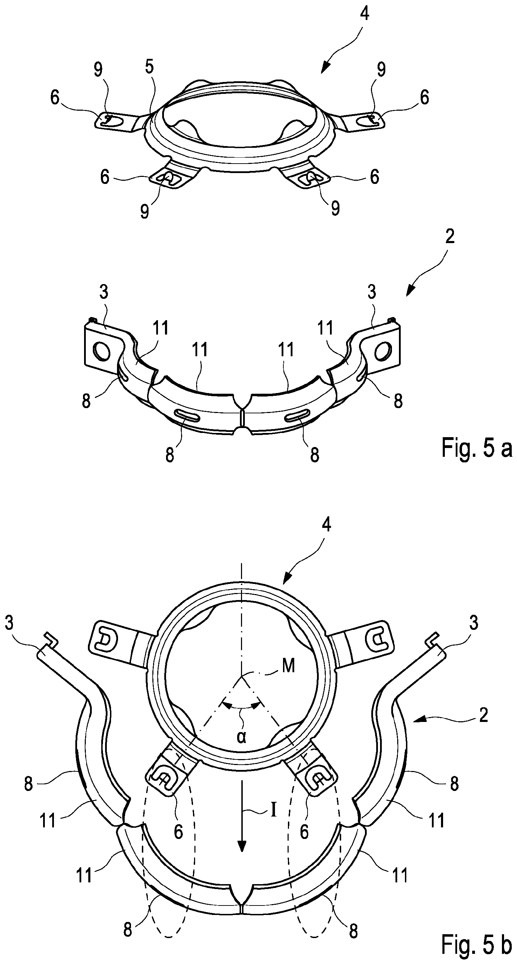

Die Abbildungsfolge der Figuren 5a - 5f stellt Ansichten letzter Schritte eines Zusammenbaus der Spannvorrichtung gemäß Figur 3 nach einem ersten Verfahren dar. Die Dichtung 4 weist vier daran einstückig angeformte Befestigungsmittel 6 auf, die an freien Enden jeweils eine Rastnase 9 tragen. Die Klammer 2 ist als Stanz-Biege-Teil nach Art einer Gelenkkette ausgeführt, hier als viergliedrige Gelenkkette. Jedes Kettenglied 11 der Gelenkkette weist zentral eine Ausnehmung 8 auf.

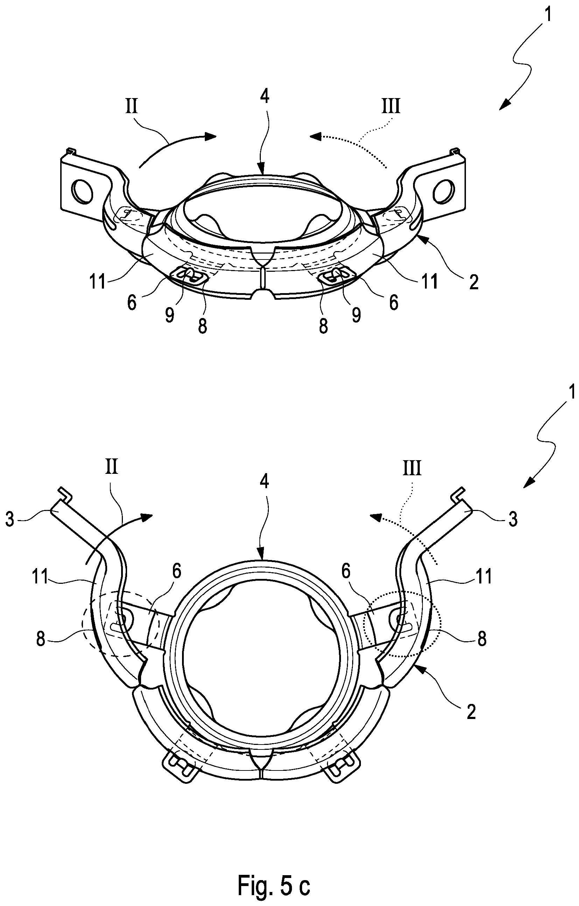

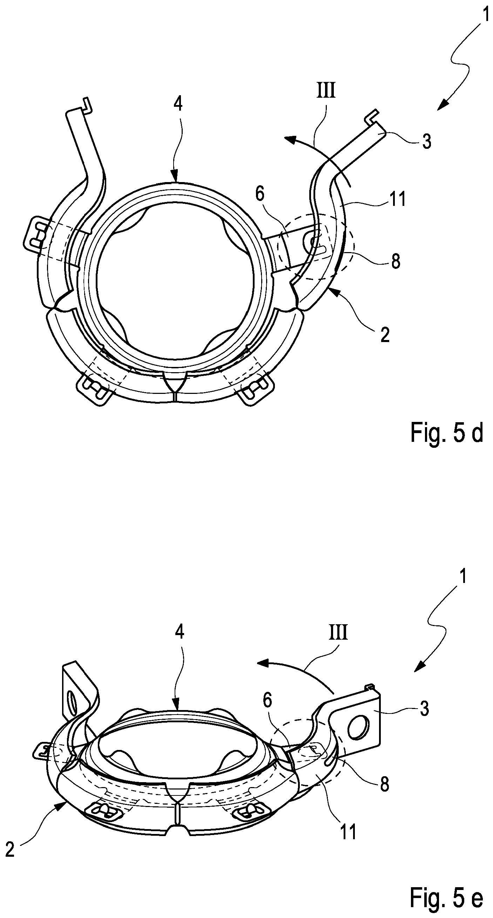

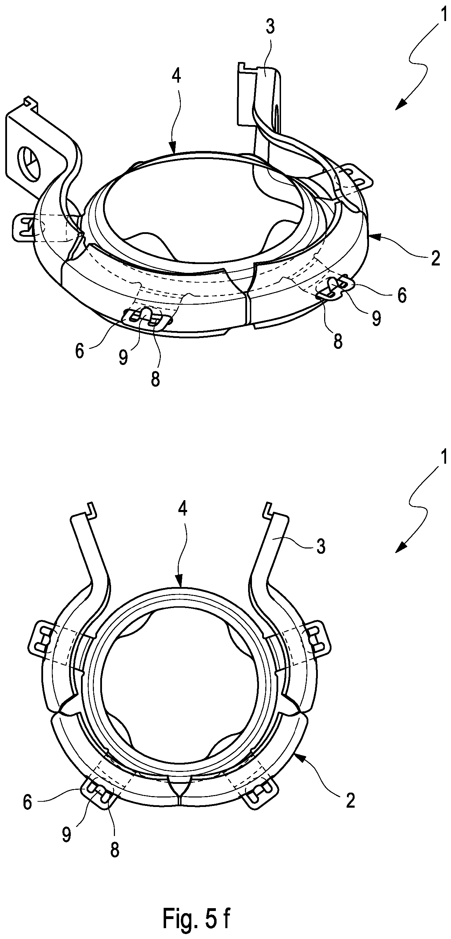

Figur 5b zeigt einen ersten Schritt I eines Zusammenbaus, bei dem zwei Befestigungsmittel 6 der Dichtung 4 in entsprechende Ausnehmungen 8 der Klammer 2 eingeführt werden, wie durch die gestrichelten Ovale angedeutet. Anhand der Darstellung von Figur 5 wird deutlich, dass mindestens zwei Befestigungsmittel 6 an der Dichtung 4 zur Fixierung an der Klammer 2 erforderlich sind, um eine Fixierung der Dichtung 4 in der Klammer 2 sowie eine zuverlässige Positionierung der Dichtung 4 über die Klammer 2 zu gewährleisten. Dabei sind die Befestigungsmittel 6 zueinander in Bezug auf einen Mittelpunkt M so angeordnet, dass sie einen von 180° abweichenden Winkel α bilden, hier einen spitzen Winkel von ca. 80°.

Gemäß Figur 5b sind die Rastnasen 9 zum Abschluss von Schritt I in der Klammer 2 bereits verrastet, indem sie sich hier den Ausnehmungen 8 der Klammer 2 wieder geöffnet haben. Nun wird in diesem Ausführungsbeispiel in Schritt II ein linker Schenkel 3 soweit geschlossen, dass die Rastnase 9 an dem Befestigungsmittel 6 der Dichtung 4 in die entsprechende Ausnehmung 8 der Klammer 2 eingeführt werden, wie wiederum durch das gestrichelte Oval angedeutet.

Abschließend zeigen die Abbildungen der Figuren 5d und 5e die analoge Durchführung des dritten Teilschrittes III. Die einsatzfertige Spannvorrichtung 1 ist in der perspektivischen Darstellung sowie der Draufsicht von Figur 5f zu sehen. Hierin ist deutlich zu erkennen, dass nun die Rastnasen 9 an den Ausnehmungen 8 der Klammer 2 verrastet sind. Damit ist die Dichtung 4 an der Klammer 2 fixiert, wobei die Klammer 2 aber ohne Verformung der Dichtung 4 gespannt werden kann.

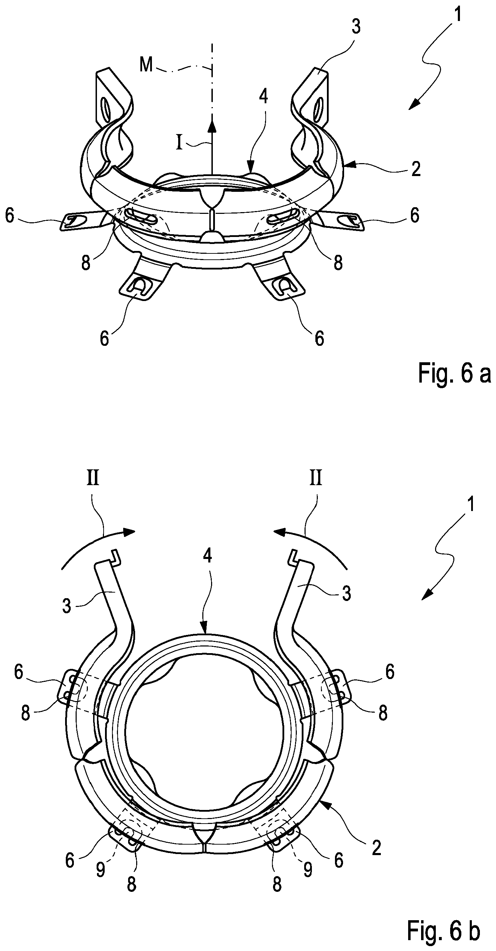

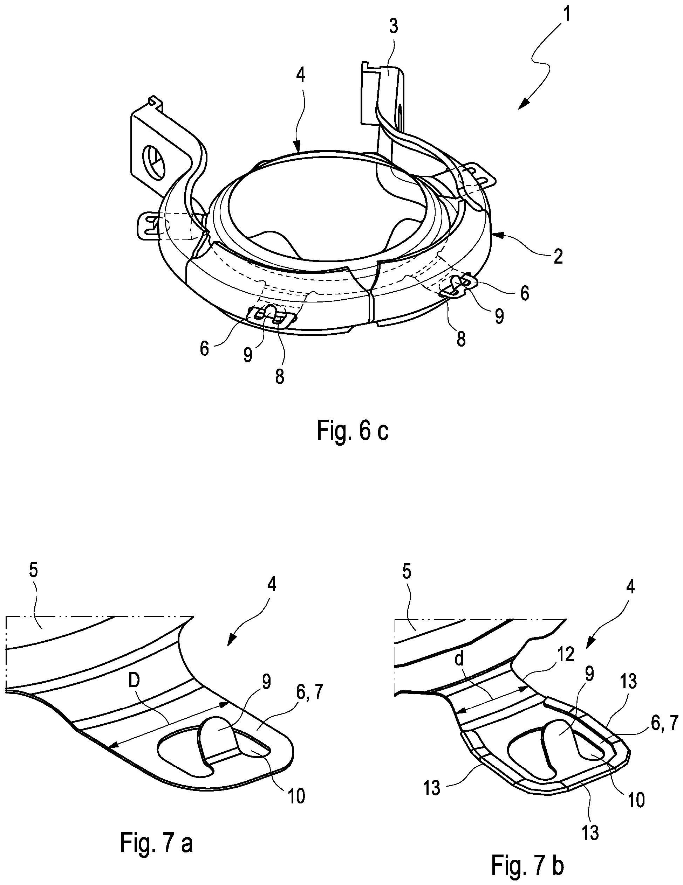

Figuren 6a - 6c zeigen Ansichten letzter Schritte eines Zusammenbaus der Spannvorrichtung gemäß Figur 3 nach einem zweiten Verfahren. Bei diesem zweiten Verfahren wir wiederum auf eine Klammer 2 und eine Dichtung 4 aufgebaut, die beide nach Stanz-Biegeverfahren in bekannter Weise hergestellte worden sind, wenn auch die Klammer 2 als Gelenkkette mit vier Kettenglieder 11 ausgebildet ist und jedes der Kettenglieder 11 in einem mittleren Bereich eine Ausnehmungen 8 aufweist und die Dichtung 4 wiederum vier Befestigungsmittel 6 mit Rastnasen 9 aufweist. Hier wird nun der Tatsache Rechnung getragen, dass es sich bei dem Material der Dichtung 4 um einen rostfreien Federstahl handelt, indem die Federelastizität der Dichtung 4 für den Zusammenbau der Spannvorrichtung 1 genutzt wird. Hierzu werden die Klammer 2 und die Dichtung 4 entlang der gemeinsamen Mittelachse M angeordnet. Dann wird die Dichtung 4 in einem Schritt I in die Klammer 2 eingeschoben, so dass die vier Befestigungsmittel 6 in korrespondierende Ausnehmungen 8 eingreifen. In einem Schritt II müssen die Befestigungsmittel 6 nun durch leichtes Schließen der Klammer 2, wie durch die Pfeile angedeutet, nur noch soweit durch die Ausnehmungen 8 hindurchgeschoben werden, dass die endseitig angeordneten Rastnasen 9 hinter den Ausnehmungen 8 ausfedern. Damit ist der Zusammenbau der Spannvorrichtung nach dem zweiten Verfahren auch schon abgeschlossen.

Figuren 7a und 7b sind vergrößerte Einzelheiten zweier Ausführungsbeispiele von Rastnasen. Die Ansicht von Figur 7a zeigt einen vergrößerten Ausschnitt eines Befestigungsmittels 6 der Dichtung 4 des Ausführungsbeispiels der Abbildungen 3, 4d, 5a - 6c. Das Befestigungsmittel 6 läuft an einem freien Ende von der Dichtung 4 hinweg in eine aus der Ebene des Befestigungsmittels 6 herausgebogene Rastnase 9 hin aus, deren Federcharakteristik durch einen Freischnitt 11 eingestellt ist. Um den Grad der Beweglichkeit eines derartigen Befestigungsmittels 6 in einer der Ausnehmungen 8 der Klammer 2 noch zu erhöhen, weist ein Befestigungsmittel 6 gemäß Figur 7b von dem Dichtbett 5 her eine Verjüngung 12 oder Einschnürung mit d < D auf, bevor das Befestigungsmittel 6 in das freie Ende mit der Rastnase 9 hin ausläuft. Diese Verjüngung 12 oder Einschnürung kann symmetrisch zu einer Mittelachse des Befestigungsmittels 6 liegen, kann aber auch asymmetrisch dazu geformt sein. Ziel dieser Verjüngung 12 oder Einschnürung des Befestigungsmittels 6 ist es aber in jedem Fall, bei angepasster Geometrie einer korrespondierenden Ausnehmung 8 der Klammer 2 eine Beweglichkeit insbesondere beim Schließen der Klammer 2 zu erhöhen, oder aber bei Verringerung der Größe dieser Ausnehmung 8 der Klammer 2 beizubehalten. Die Fixierung der Dichtung 4 an der Klammer 2 wird hierdurch nicht geschwächt, hingegen kann aber die Klammer 2 durch diese Maßnahme mechanisch gestärkt werden.

Das Befestigungsmittel 6 gemäß Figur 7b weist zudem eine Umbördelung 13 an dem freien Ende auf. Hierdurch wird an Verletzungsrisiko von in einen freien Außenraum ragenden Kanten deutlich gesenkt, die als Produkt eines Stanzverfahrens recht scharf sein können.

Die Dichtung 4 hat in den dargestellten Ausführungsformen durch die Befestigungsmittel 6 vier lose Haltepunkte an der Klammer 2. Dabei ist die Dichtung 4 so an der Klammer fixiert sind, dass die Klammer 2 ohne Beeinträchtigung der Klammer bzw. Spannfunktion geschlossen werden kann. Die Befestigungsmittel 6 werden durch die Klammer 2 beim Spannen bzw. Festziehen also im Unterschied zum Stand der Technik in keinem Fall verformt. Die vier Befestigungsmittel 6 werden durch korrespondierende Ausnehmungen 8 der Klammer 2 eingeschoben, dann wird die Klammer 2 gesichert. Die Befestigungsmittel 6 sind so gestaltet, dass die Befestigungsmittel 6 die Klammer 2 in einem geöffneten und geschlossenen Zustand soweit frei beweglich machen, so dass die Klammer 2 geschlossen werden kann, ohne dass sie eine verformende Kraft auf die Dichtung 4 ausüben kann. Dadurch kann die Dichtung 4 auch wieder geöffnet werden, ohne dass es zu einer direkten und quasi punktuellen Krafteinwirkung der Klammer 2 auf die Dichtung 4 kommt. Da es keine Krafteinwirkung gibt, wird die Dichtfunktion nicht beeinträchtigt, weil die Klammer 2 die Dichtung 4 im geschlossenen Zustand nicht ungleichmäßig belastet oder gar deformiert.

Aufgrund der Tatsache, dass es nur bis zu vier einfache Laschen als Befestigungsmittel 6 der Dichtung 4 in der Klammer 2 gibt, sind der Prozess der Herstellung und die hierbei einzusetzenden Werkzeuge deutlich billiger als bei auf dem Markt bekannten Lösungen. Die vorstehend dargestellten Bauformen der Dichtung 4 sind als Stanz-Biegeteile in wenigen Fertigungsschritten herstellbar. Die Spannvorrichtung 1 ist als robuste Dichtungslösung konzipiert, die als Metalldichtung 4 in der Klammer 2 integriert ist, die bei reduzierten Gesamtkosten in einen Temperaturbereich von über 750°C bis ca. 900°C bei verbesserter Handhabung einsetzbar ist.

### Bezugszeichenliste

- 1: Spannvorrichtung
- 2: Klammer
- 3: freier Schenkel
- 4: Dichtung
- 5: Dichtbett
- 6: Befestigungsmittel
- 7: federelastischer Klips
- 8: längliche Ausnehmung der Klammer 2
- 9: Rastnase
- 10: Freischnitt
- 11: Kettenglied / Glied einer Klammer 2 als Gelenkkette
- 12: Verjüngung / Einschnürung
- 13: Umbördelung als Kantenschutz

- α: Winkel
- d: Weite des Befestigungsmittels 6 in der Verjüngung 12
- D: Weite des Befestigungsmittels 6 ohne Verjüngung 12
- M: Mittelachse
- K: Kerbe zur Orientierung beim Einbau

## Patentansprüche

1. Spannvorrichtung (1) zum Abdichten und Verbinden zweier Rohre an einander benachbart angeordneten Enden,
wobei diese Enden beider Rohre jeweils eine nach außen hin gerichtete Umfangswulst oder eine Vielzahl von nach außen hin gerichteten Vorsprüngen aufweisen,
mit einer diese Wülste oder Vorsprünge gemeinsam umschließenden Klammer (2) mit U- oder V-förmigem Querschnitt und
einer an dieser Klammer (2) durch Befestigungsmittel (6) fixiert angeordneten Dichtung (4),
**dadurch gekennzeichnet, dass**
die Klammer (2) Ausnehmungen (8) aufweist, die in einer Ebene im Wesentlichen senkrecht zu einer Mittelachse (M) verlaufen, und
die Dichtung (4) durch an der Dichtung (4) vorgesehene und nasenförmig ausgebildete Befestigungsmittel (6) an den Ausnehmungen (8) der Klammer (2) fixiert ist, wobei die Befestigungsmittel (6) an den Ausnehmungen (8) der Klammer (2) verschieblich hindurchgreifend angeordnet sind.

2. Spannvorrichtung (1) nach dem vorhergehenden Anspruch, **dadurch gekennzeichnet, dass** die Ausnehmungen (8) der Klammer (2) und/oder die Befestigungsmittel (6) in ihrer Länge und Breite so bemessen sind, dass die Befestigungsmittel (6) als federelastische Klips (7) bei einer Verformung der Dichtung (4) in den Ausnehmungen (8) der Klammer (2) verschieblich sind, und zwar in radialer Richtung und/oder in Umfangsrichtung.

3. Spannvorrichtung (1) nach einem der vorhergehenden Ansprüche, **dadurch gekennzeichnet, dass** die Befestigungsmittel (6) mit der Dichtung (4) einstückig verbunden sind.

4. Spannvorrichtung (1) nach einem der vorhergehenden Ansprüche, **dadurch gekennzeichnet, dass** die Befestigungsmittel (6) dadurch selber rastend ausgebildet sind, dass sie im Wesentlichen senkrecht zu einer Erstreckungsrichtung der Ausnehmungen (8) der Klammer (2) ungefähr wellenförmig gebogen sind.

5. Spannvorrichtung (1) nach einem der vorhergehenden Ansprüche, **dadurch gekennzeichnet, dass** die Befestigungsmittel (6) eine Raste aufweisen, die federelastisch ausgeführt ist.

6. Spannvorrichtung (1) nach dem vorhergehenden Anspruch, **dadurch gekennzeichnet, dass** die Befestigungsmittel (6) eine Raste in Form einer Rastnase (9) aufweisen.

7. Spannvorrichtung (1) nach dem vorhergehenden Anspruch, **dadurch gekennzeichnet, dass** die Rastnase (9) einen zusätzlichen Freischnitt (10) aufweist.

8. Spannvorrichtung (1) nach einem der vorhergehenden Ansprüche, **dadurch gekennzeichnet, dass** mindestens zwei Befestigungsmittel (6) an der Dichtung (4) vorgesehen sind, die zueinander in Bezug auf einer Mittelachse (M) einen von 180° abweichenden Winkel (α) bilden.

9. Spannvorrichtung (1) nach einem der vorhergehenden Ansprüche, **dadurch gekennzeichnet, dass** mindestens drei Befestigungsmittel (6) an der Dichtung (4) verteilt vorgesehen sind.

10. Spannvorrichtung (1) nach einem der vorhergehenden Ansprüche, **dadurch gekennzeichnet, dass** die Klammer (2) nach Art einer Gelenkkette ausgeführt ist, und zentral in jedem Kettenglied (11) eine Ausnehmung (8) aufweist.

11. Spannvorrichtung (1) nach dem vorhergehenden Anspruch, **dadurch gekennzeichnet, dass** die Klammer (2) als viergliedrige Gelenkkette ausgeführt ist.

12. Spannvorrichtung (1) nach einem der vorhergehenden Ansprüche, **dadurch gekennzeichnet, dass** ein Stanz-Biegeteil aus Metallblech die Befestigungsmittel (6) umfasst, Teil eines Dichtungssystems ist und als Träger einer Weichstoff-Dichtung ausgebildet ist.

## Claims

1. Clamping device (1) for sealing and connecting two pipes at ends arranged adjacent to each other,
aid ends of both pipes each having an outwardly directed circumferential bead or a plurality of outwardly directed projections,
with a clamp (2) with a U- or V-shaped cross-section jointly enclosing these beads or projections, and
a seal (4) arranged fixedly on this clip (2) by fastening means (6),
**characterized in that**
the clamp (2) has recesses (8) which run in a plane essentially perpendicular to a central axis (M), and
the seal (4) is fixed to the recesses (8) of the clamp (2) by fastening means (6) which are provided on the seal (4) and are in the form of a nose,
the fastening means (6) being arranged on the recesses (8) of the clamp (2) in such a way as to engage through them in a displaceable manner.

2. Clamping device (1) according to the preceding claim, **characterized in that** the recesses (8) of the clamp (2) and/or the fastening means (6) are dimensioned in their length and width such that the fastening means (6) are displaceable as spring-elastic clips (7) in the recesses (8) of the clamp (2) when the seal (4) is deformed, namely in the radial direction and/or in the circumferential direction.

3. Clamping device (1) according to one of the preceding claims, **characterized in that** the fastening means (6) are integrally connected to the seal (4).

4. Clamping device (1) according to one of the preceding claims, **characterized in that** the fastening means (6) are designed to be self-locking **in that** they are bent in a non-approximately wave-shaped manner essentially perpendicular to an extension direction of the recesses (8) of the clamp (2).

5. Clamping device (1) according to one of the preceding claims, **characterized in that** the fastening means (6) have a detent which is of spring-elastic design.

6. Clamping device (1) according to the preceding claim, **characterized in that** the fastening means (6) have a detent in the form of a detent lug (9).

7. Clamping device (1) according to the preceding claim, **characterized in that** the latching nose (9) has an additional free cut (10).

8. Clamping device (1) according to one of the preceding claims, **characterized in that** at least two fastening means (6) are provided on the seal (4), which form an angle (α) deviating from 180° with respect to a central axis (M).

9. Clamping device (1) according to one of the preceding claims, **characterized in that** at least three fastening means (6) are provided distributed on the seal (4).

10. Clamping device (1) according to one of the preceding claims, **characterized in that** the clamp (2) is designed in the manner of a link chain and has a recess (8) centrally in each chain link (11).

11. Clamping device (1) according to the preceding claim, **characterized in that** the clamp (2) is designed as a four-link link chain.

12. Clamping device (1) according to one of the preceding claims, **characterized in that** a stamped and bent part made of sheet metal comprises the fastening means (6), is part of a sealing system and is designed as a carrier of a soft material seal.

## Revendications

1. Dispositif de serrage (1) pour assurer l'étanchéité et le raccordement de deux tuyaux à des extrémités disposées de manière adjacente l'une à l'autre,
ces extrémités des deux tubes présentant chacune un bourrelet périphérique dirigé vers l'extérieur ou une pluralité de saillies dirigées vers l'extérieur,
avec une pince (2) entourant ensemble ces bourrelets ou ces saillies et présentant une section transversale en forme de U ou de V, et
un joint d'étanchéité (4) disposé de manière fixe sur cette agrafe (2) par des moyens de fixation (6),
**caractérisé en ce que**
l'agrafe (2) présente des évidements (8) qui s'étendent dans un plan essentiellement perpendiculaire à un axe central (M), et
le joint (4) est fixé aux évidements (8) de la pince (2) par des moyens de fixation (6) prévus sur le joint (4) et réalisés en forme d'ergot, les moyens de fixation (6) étant disposés de manière à pouvoir être déplacés à travers les évidements (8) de la pince (2).

2. Dispositif de serrage (1) selon la revendication précédente, **caractérisé en ce que** les évidements (8) de la pince (2) et/ou les moyens de fixation (6) sont dimensionnés dans leur longueur et leur largeur de telle sorte que les moyens de fixation (6) peuvent être déplacés dans les évidements (8) de la pince (2) en tant que clips (7) élastiques lors d'une déformation du joint (4), et ce dans la direction radiale et/ou dans la direction périphérique.

3. Dispositif de serrage (1) selon l'une des revendications précédentes, **caractérisé en ce que** les moyens de fixation (6) sont reliés d'un seul tenant au joint d'étanchéité (4).

4. Dispositif de serrage (1) selon l'une des revendications précédentes, **caractérisé en ce que** les moyens de fixation (6) sont conçus de manière à s'encliqueter automatiquement, **en ce qu'**ils sont incurvés de manière approximativement ondulée, essentiellement perpendiculairement à une direction d'extension des évidements (8) de la pince (2).

5. Dispositif de serrage (1) selon l'une des revendications précédentes, **caractérisé en ce que** les moyens de fixation (6) présentent un cran d'arrêt qui est réalisé de manière élastique.

6. Dispositif de serrage (1) selon la revendication précédente, **caractérisé en ce que** les moyens de fixation (6) présentent un cran d'arrêt sous la forme d'un ergot d'arrêt (9) .

7. Dispositif de serrage (1) selon la revendication précédente, **caractérisé en ce que** le nez d'arrêt (9) présente une découpe supplémentaire (10).

8. Dispositif de serrage (1) selon l'une des revendications précédentes, **caractérisé en ce qu'**au moins deux moyens de fixation (6) sont prévus sur le joint d'étanchéité (4), qui forment entre eux un angle (α) différent de 180° par rapport à un axe central (M).

9. Dispositif de serrage (1) selon l'une des revendications précédentes, **caractérisé en ce qu'**au moins trois moyens de fixation (6) sont prévus de manière répartie sur le joint d'étanchéité (4).

10. Dispositif de serrage (1) selon l'une des revendications précédentes, **caractérisé en ce que** l'agrafe (2) est réalisée à la manière d'une chaîne articulée et présente un évidement (8) au centre de chaque maillon de chaîne (11).

11. Dispositif de serrage (1) selon la revendication précédente, **caractérisé en ce que** la pince (2) est réalisée sous forme de chaîne articulée à quatre maillons.

12. Dispositif de serrage (1) selon l'une des revendications précédentes, **caractérisé en ce qu'**une pièce découpée et pliée en tôle métallique comprend les moyens de fixation (6), fait partie d'un système d'étanchéité et est conçue comme support d'un joint en matière souple.
